(19) **Europäisches Patentamt**
**European Patent Office**
**Office européen des brevets**

(11) **EP 1 883 071 A1**

(12) **EUROPEAN PATENT APPLICATION**
published in accordance with Art. 153(4) EPC

(43) Date of publication:
**30.01.2008 Bulletin 2008/05**

(51) Int Cl.:
*G11B 23/30* (2006.01)  *G11B 7/24* (2006.01)

(21) Application number: **06745421.5**

(22) Date of filing: **18.04.2006**

(86) International application number:
**PCT/JP2006/308139**

(87) International publication number:
**WO 2006/118025 (09.11.2006 Gazette 2006/45)**

(84) Designated Contracting States:
**DE FR GB IT NL**

(30) Priority: **28.04.2005 JP 2005131004**

(71) Applicant: **IntelligentDisc, Inc.**
**Yokohama-shi, Kanagawa 2220033 (JP)**

(72) Inventors:
• **YASUDA, Hiroshi,**
**c/o IntelligentDisc Inc.**
**Kouhoku, Yokohama-shi, Kanagawa 2220033 (JP)**

• **KARIMOTO, Hiroyasu,**
**c/o IntelligentDisc Inc.**
**Kouhoku, Yokohama-shi, Kanagawa 2220033 (JP)**
• **SHIGETOMI, Takashi,**
**c/o IntelligentDisc Inc.**
**Kouhoku, Yokohama-shi, Kanagawa 2220033 (JP)**
• **GOTO, Tomio, c/o IntelligentDisc Inc.**
**Kouhoku, Yokohama-shi, Kanagawa 2220033 (JP)**

(74) Representative: **Vossius & Partner**
**Siebertstrasse 4**
**81675 München (DE)**

(54) **DISC COMMUNICATION STRUCTURE**

(57)    To provide a disk communication structure capable of stable communication without restriction of data transfer rate and capacity.

An electronic circuit such as microcomputer is provided on the disk 10. First optical means 13 is provided on the disk 10 Second optical means 21 is provided on the stationary portion 20 physically separated from the disk 10. The first and second optical means 13, 21 are opposed each other. Optical communication is performed between the first and second optical means 13, 21.

Fig.1

EP 1 883 071 A1

**Description**

FIELD OF THE INVENTION

The present invention relates to a disk communication structure, and more particularly to a disk communication structure for performing communication between a circuit mounted on an optical storage medium to be rotated and a device external to the optical storage medium.

DESCRIPTION OF THE RELATED ART

Systems, in which a signal processing circuit such as a CPU is mounted on an optical disk and in which signal processes relating organically to information recorded on the optical disk are carried out, have attracted attention because they rapidly broaden the applications of conventional optical disks. For example, it is possible for a CPU (microcontroller) on an optical storage medium to autonomously control an external device. The communication between a signal processing circuit such as a CPU and an external device is often performed through the wireless line between the antenna of the CPU and the antenna of the external device. In a CPU mounted on an optical disk, an RF-ID chip (IC tag) is often employed because it is structurally simple and low-cost.

The communication between an electronic circuit mounted on this kind of optical disk and peripheral equipment such as a computer system is performed through the wireless line between the antennas provided in the electronic circuit and peripheral equipment. The basic structure of this kind of system is disclosed, for example, in the specifications of patent applications of this inventor (e.g., see patent document 1).

[Patent Document 1] Japanese Patent Laid-Open Publication No.Hei 11-7703 (Fig.2, Column No. [0010])

DISCLOSURE OF THE INVENTION

PROBLEMS TO BE SOLVED BY THE INVENTION

An optical disk with the above-described RF-ID chip mounted thereon is driven by a disk drive, and between a reader/writer (R/W) unit and the RF-ID chip, information is transmitted by radio-frequency signals.

However, the conventional radio-frequency communication has the following problems.

The conventional radio-frequency communication has physical limits to a frequency band which can be used in radio and communication power (limits to the capacity of electric power that can be supplied to the transmitter portion of a disk) and therefore has a limit to its data transmission rate. That is, it is extremely difficult to mount a large-capacity power source circuit on an optical storage medium which rotates at high speed, and a solar battery cannot obtain sufficient efficiency. Therefore, like RF-IC tags, electric power is normally obtained from the RF radio wave received. However, even in this method, the capacity of electric power that can be obtained by RF waves and electromagnetic induction is very small and transmission power is also small. In addition, since there are legal restrictions, the final data transmission rate is as low as a few megabit/s or less. For example, it is difficult for a microcontroller on an optical storage medium to process high-qualitp images and digital audio data which require a transmission rate of a few megabit/s or greater.

Accordingly, it is an object of the present invention to provide a disk communication structure that imposes few limits to its data transmission rate and capacity and makes stable communication possible, while overcoming such problems.

MEANS FOR SOLVING THE PROBLEMS

In order to solve the above problems, a disk communication structure according to the present invention employs the following featured structures.

(1) A disk communication structure comprising:

a rotatable disk having an electronic circuit mounted thereon;
first optical means for transmitting and receiving light, provided on said disk;
a stationary member physically separated from said disk; and
second optical means for transmitting and receiving light, provided on a portion of said stationary member which faces said first optical means and disposed above an axis of rotation of said disk; wherein
optical communication is performed between said first optical means and said second optical means.

(2) A disk communication structure comprising:

a rotatable disk having an electronic circuit mounted thereon;
first optical means for transmitting and receiving light, provided on said disk;
a stationary member physically separated from said disk;
second optical means for transmitting and receiving light, provided on a portion of said stationary member which faces said first optical means and disposed above an axis of rotation of said disk; and
an adapter for setting an optical path between said first optical means and said second optical means, provided on said stationary member; wherein
optical communication is performed between said first optical means and said second optical means.

(3) A disk communication structure comprising:

a rotatable disk having an electronic circuit mounted thereon;
first optical means for transmitting and receiving light, provided on a center of rotation of said disk;
a stationary member physically separated from said disk; and
second optical means for transmitting and receiving light, provided on a portion of said stationary member which faces said first optical means and disposed above an axis of rotation of said disk; wherein
optical communication is performed between said first optical means and said second optical means.

(4) A disk communication structure comprising:

a rotatable disk having an electronic circuit mounted thereon;
a plurality of first optical means for transmitting and receiving light, provided at spaced positions on said disk;
a stationary member physically separated from said disk; and
second optical means for transmitting and receiving light, provided on a portion of said stationary member which faces said first optical means and disposed above an axis of rotation of said disk; wherein
optical communication is performed between said plurality of first optical means and said second optical means.

(5) A disk communication structure comprising;

a rotatable disk having an electronic circuit mounted thereon;
a plurality of first optical means for transmitting and receiving light, provided at spaced positions on said disk;
a stationary member physically separated from said disk;
second optical means for transmitting and receiving light, provided on a portion of said stationary member which faces said first optical means and disposed above an axis of rotation of said disk; and
an adapter for setting an optical path between said plurality of first optical means and said second optical means, provided on said stationary member; wherein
optical communication is performed between said plurality of first optical means and said second optical means.

(6) A disk communication structure comprising:

a rotatable disk having an electronic circuit mounted thereon;
a plurality of first optical means for transmitting and receiving light, provided so as to be spaced on a center of rotation of said disk;
a stationary member physically separated from said disk; and
second optical means for transmitting and receiving light, provided on a portion of said stationary member which faces said first optical means and disposed above an axis of rotation of said disk; wherein
optical communication is performed between said plurality of first optical means and said second optical means.

(7) The disk communication structure as set forth in any one of claims 4 to 6, wherein said plurality of first optical means comprise two optical means.
(8) The disk communication structure as set forth in any one of claims 1 to 7, wherein said first optical means is connected with the circuit provided on said disk.
(9) The disk communication structure as set forth in claim 8, wherein said electronic circuit is buried in said disk.
(10) The disk communication structure as set forth in any one of claims 4 to 6, wherein said plurality of first optical means comprise two optical means having the same specification.
(11) The disk communication structure as set forth in any one of claims 4 to 6, wherein one of two signals from said two optical means is used.
(12) The disk communication structure as set forth in claim 2 or 5, wherein said adapter is discal in shape, has a first transparent portion, a first reflecting portion, a second reflecting portion, and a second transparent portion, and is configured such that said first transparent portion optically communicates with said first optical means, said first reflecting portion reflects light in order to transfer light between said first transparent portion and said second reflecting portion, said second reflecting portion reflects light in order to transfer light between said second transparent portion and said first reflecting portion, and said second transparent portion optically communicates with said second optical means.

(13) The disk communication structure as set forth in claim 12, wherein said reflecting portion comprises a ring stationary mirror, and said second reflecting portion comprises a center condenser mirror.

(14) The disk communication structure as set forth in any one of claims 1 to 13, wherein optical communication through said optical means is performed in block units.

(15) The disk communication structure as set forth in any one of claims 1 to 14, wherein electric power for said electronic circuit, a clock signal, and at least a timing signal in a block unit of communication data in a block unit are supplied from outside said disk to said disk by contact-type or non-contact type connection means.

(16) The disk communication structure as set forth in claim 15, wherein said electric power for said electronic circuit is supplied from outside said disk by connection means other than light.

(17) The disk communication structure as set forth in claim 15, wherein said electric power for said electronic circuit is supplied by light that has a frequency different from a frequency for said optical communication.

(18) The disk communication structure as set forth in claim 17, wherein an optical path for said electric power is optically shielded from an optical path for said optical communication.

(19) The disk communication structure as set forth in any one of claims 1 to 18, wherein said disk comprises an optical disk.

(20) The disk communication structure as set forth in any one of claims 1 to 19, wherein said optical means comprises a phototransistor.

## ADVANTAGES OF THE INVENTION

According to the present invention, the communication between the disk and the stationary member separated away from the disk is performed by the phototransistors provided on the disk and stationary member so that an optical path remains constant. Accordingly, the free space propagation path length of communication light is kept constant, whereby communication information can be used with a loss in the communication path constant and the S/N ratio maximum. As a result, a reduction in the power consumption for communication, structural simplification, and cost reductions become possible.

## BRIEF DESCRIPTION OF THE DRAWINGS

Fig.1 is a simplified sectional view of an embodiment of the disk communication structure according to the present invention.

FIG. 2 is a simplified sectional view of a disk communication structure according to another embodiment of the present invention.

FIG. 3 is a simplified sectional view of a disk communication structure according to still another embodiment of the present invention.

FIG. 4 shows a fourth embodiment in which the optical space diversity configuration is applied to the embodiment shown in FIG. 1.

FIG. 5 shows a fourth embodiment in which the optical space diversity configuration is applied to the embodiment shown in FIG. 2.

FIG. 6 shows a fourth embodiment in which the optical space diversity configuration is applied to the embodiment shown in FIG. 3.

Fig.7 is a simplified sectional view of another embodiment of the present invention.

Fig.8 is a simplified sectional view of more another embodiment of the present invention.

## BRIEF DESCRIPTION OF THE DRAWINGS

| 10 | optical disk |
| 11,20 | printed-circuit board |

| 12 | such as a CPU, etc |
| 13,13A,13B,21,22 | phototransistors |
| 14 | solar cell |
| 30,40 | adapter |
| 31,31A,31B | first transp arent portion |
| 32,32A,32B | first reflecting portion |
| 33,33A,33B | second reflecting portion |
| 34 | second transparent portion |
| 50 | shielding wall |

DESCRIPTION OF THE PREFERRED EMBODIMENTS

The configuration and operation of a preferred embodiment of a disk communication structure according to the present invention will be described with reference to the accompanying drawings. In the following description, while optical disks are employed in the disk communication structure, the present invention is not limited to optical disks, but is applicable to all optical storage media having the same structure.

In the present invention, an electronic circuit such as a microcontroller (CPU) is mounted on an optical disk which is an optical storage medium. In controlling peripheral equipment (external equipment such as a personal computer, etc) by the microcontroller, a light-emitting element (and/or a light-receiving element) is mounted on an optical storage medium, while a light-receiving element (and/or a light-emitting element) is mounted and fixed on a member external to an optical communication storage, for example, a printed-circuit board. Through a pair of these light-emitting and light-receiving elements (and/or light-receiving and light-emitting elements), the communication between the optical storage medium and the external member is performed. In the following description, while a light-emitting element (and/or a light-receiving element) and a light-receiving element (and/or a light-emitting element) are sometimes referred to as phototransistors, they have the light-emitting or light-receiving function as needed, as described above.

At the same time, an optical path is disposed so that the optical distance and optical propagation loss between phototransistors for transmission and reception remain constant with respect to rotation of an optical storage medium.

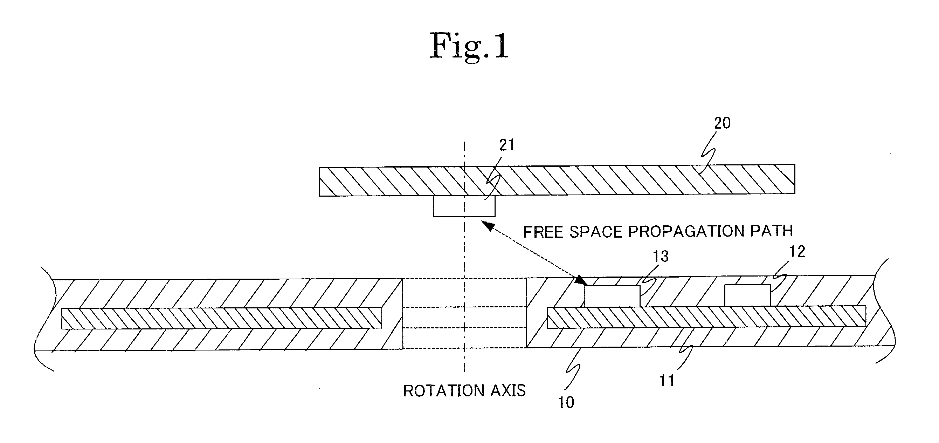

FIG. 1 is a simplified sectional view of an embodiment of the disk communication structure according to the present invention. This embodiment is suitable for use in optical storage media having a hole at its central portion such as DVDs, CDs, etc.

An optical disk 10, which rotates on its own axis of rotation at high speed, has a printed-circuit board 11 buried therein. The printed-circuit board 11 has a circuit (such as a CPU, etc.) 12 and a phototransistor 13 mounted thereon, the circuit 12 being connected to the phototransistor 13. The phototransistor 13 has a transparent top surface so that it can transmit and receive light. Instead of being buried in the optical disk 10, the printed-circuit board 11 may be formed on the surface of the optical disk 10. Also, the phototransistor 13 does not need to be buried in the optical disk 10, and can transmit and receive light if it is exposed to the surface of the optical disk 10.

On the other hand, above the optical disk 10, a printed-circuit board 20 is disposed independently of the optical disk 10, and above the rotation axis of the optical disk 10, the printed-circuit board 20 is provided with a phototransistor 21.

In such a configuration, the communication between the CPU 12 of the optical disk 10 and the printed-circuit board 20 external to the optical disk 10 is established by the transmission and reception of light through the phototransistor 13 of the optical disk 10 and the phototransistor 21 of the printed-circuit board 20.

In the embodiment shown in FIG. 1, the phototransistor 13 mounted on the printed-circuit board 11 in the optical disk 10 changes its position with rotation of the optical disk 10, but since the phototransistor 21 of the printed-circuit board 20 facing the optical disk 10 as a communication destination is disposed above the axis of rotation of the optical disk 10, the free space propagation path length of the communication light passing through phototransistors 13, 21 remains constant independently of rotation of the optical disk 10. Therefore, a loss in the communication path can be kept constant, whereby a signal-to-noise ratio (SNR) in the communication path can be most efficiently used in communication information.

As described above, by using optical communication means as a means by which a circuit on the optical disk communicates with a circuit external to the optical disk, this embodiment makes high-speed data communication possible by radio-frequency communication, makes the free space propagation path length of communication light constant, and is able to keep a loss in the communication path constant, whereby a reduction in optical communication amplitude variation due to optical disk rotation and a reduction in optical propagation loss become possible. As a result, the reduction in optical communication amplitude variation due to optical disk rotation and reduction in optical propagation loss can make the best use of the electric power consumption reduction and optical communication capacity of the electronic circuit on the optical disk. This is clear from the following description.

If a signal-to-noise ratio in a communication path varies, a theoretical maximum transmission capacity is determined at the worst value, and the width of variation exceeding the worst value becomes waste electric power consumption. The maximum bit rate is expressed by the following Equation:

$$\text{Maximum bit rate} = \text{band width} \times \log_2(1 + \text{signal electric power/noise electric power})$$

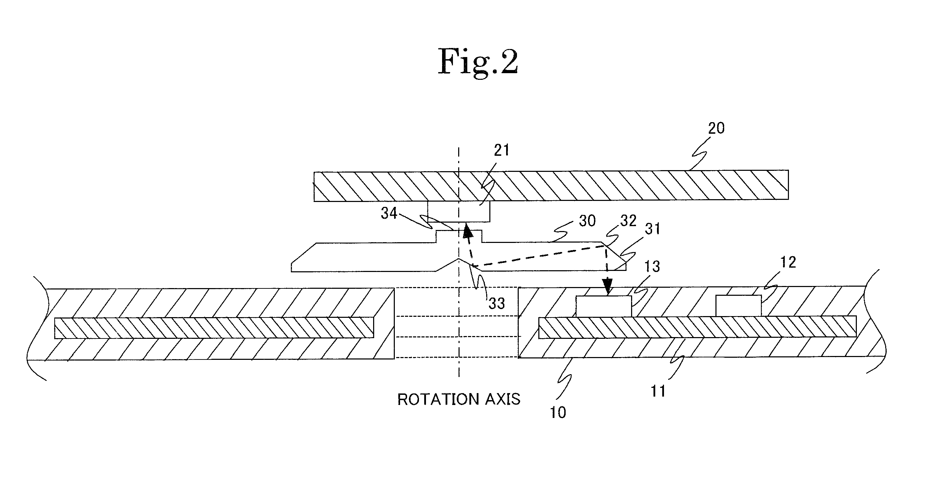

FIG. 2 is a simplified sectional view of a disk communication structure according to another embodiment of the present invention. In FIG. 2, parts given the same reference numbers as those shown in FIG. 1 are the same in structure and function.

An optical disk 10, which rotates on its own axis of rotation at high speed, has a printed-circuit board 11 buried therein. The printed-circuit board 11 has a circuit (such as a CPU) 12 and a phototransistor 13 mounted thereon, the circuit 12 being connected to the phototransistor 13. The phototransistor 13 has a transparent top surface so that it can transmit and receive light. As with FIG. 1, instead of being buried in the optical disk 10, the printed-circuit board 11 may be formed on the surface of the optical disk 10. Also, the phototransistor 13 does not need to be buried in the optical disk 10, and can transmit and receive light if it is exposed to the surface of the optical disk 10.

On the other hand, above the optical disk 10, a printed-circuit board 20 is disposed independently of the optical disk 10, and above the rotation axis of the optical disk 10, the printed-circuit board 20 is provided with a phototransistor 21.

This embodiment is configured so that the optical communication between phototransistors 13 and 21 can be more stably performed. For that reason, this embodiment is provided with a disc adapter 30, which is fixed to the printed-circuit board 20. The adapter 30 has a first transparent portion 31, a first reflecting portion 32, a second reflecting portion 33, and a second transparent portion 34. The first transparent portion 31 faces the phototransistor 13 of the optical disk 10 so that incident light from the phototransistor 13 is reflected at the first reflecting portion 32. The light reflected at the first reflecting portion 32 is reflected at the second reflecting portion 33 and goes to the second transparent portion 34. Since the second transparent portion 34 faces the phototransistor 21 provided on the external printed-circuit board 20, the light falling on the second transparent portion 34 falls on the phototransistor 21, whereby the optical signal transmission from the circuit 12 of the optical disk 10 to the external printed-circuit board 20 is performed.

On the other hand, through the reverse light route, the optical signal transmission from the external printed-circuit board 20 to the circuit 12 of the optical disk 10 is performed. That is, the light emitted from the printed-circuit board 20 through the phototransistor 21 falls on the second transparent 34, is then reflected at the second reflecting portion 33, and is further reflected at the first reflecting portion 32. The light reflected at the first reflecting portion 32 goes to the first transparent portion 31. Because the first transparent portion 31 faces the phototransistor 13 of the optical disk 10, the light falling on the first transparent portion 31 falls on the phototransistor 13, whereby the optical signal transmission to the circuit 12 of the optical disk 10 is performed.

The adapter 30 is, for example, a transparent resin disc and can be made of acryl. The first and second reflecting portions 32 and 33 may have a reflecting film formed thereon by vapor deposition, etc. The leakage of light containing information from the adapter 30 leads to leakage of information, so it is preferable that the portions other than the optical transparent portions be constructed to prevent light from leaking outside.

In the embodiment shown in FIG. 2, the phototransistor 13 mounted on the printed-circuit board 11 in the optical disk 10 changes its position with rotation of the optical disk 10. However, since the phototransistor 21 of the printed-circuit board 20 facing the optical disk 10 as a communication destination is disposed above the axis of rotation of the optical disk 10, and the disc adapter 30 of transparent resin fixed to the external printed-circuit board 20 is employed as an optical path, the propagation path length of communication light remains constant independently of rotation of the optical disk 10. Therefore, a loss in the communication path can be kept constant, leakage of light from the optical path can be reduced, the transmission efficiency of the communication path can be improved, and the transmission capacity can be maximally used.

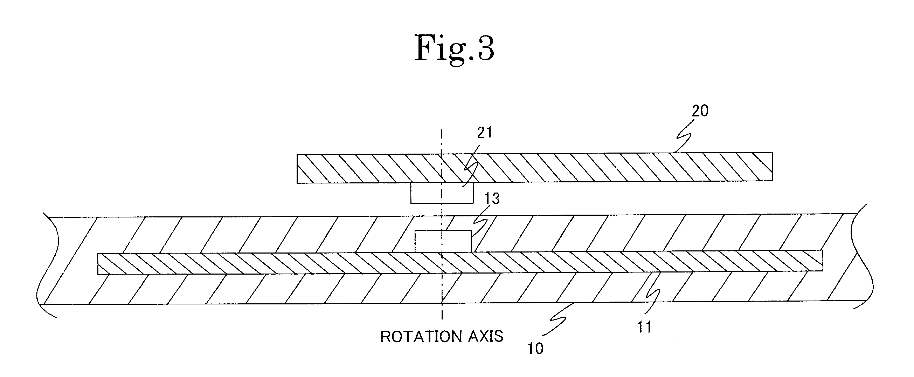

FIG. 3 is a simplified sectional view of a disk communication structure according to still another embodiment of the present invention. This embodiment is suitable for use in disk storage media having no opening at its central portion such as floppy-disks (FDs). The basic structure is similar to the embodiment shown in FIG. 1.

In this embodiment, a phototransistor 13 connected to a circuit 12 of a printed-circuit board 11 buried in a disk 10 is disposed on the center of rotation of the disk 10. On the other hand, above the rotation center of the disk 10, an external printed-circuit board 20 is provided with a phototransistor 21.

In this embodiment, the phototransistor 13 provided on the printed-circuit board 11 in the disk 10, and the phototransistor 21 facing the phototransistor 13 as a communication destination, are both disposed along the rotation axis of the disk 10, so the propagation path of communication light is kept shortest and constant regardless of rotation of the disk 10. Accordingly, a loss in the communication path and leakage of light from the optical path can be minimized, whereby the transmission efficiency of the communication path can be increased and the transmission capacity can be maximally used.

In the above-described embodiments, optical communication is performed between the single phototransistor in the disk and the single phototransistor of the member (printed-circuit board) external to the disk. However, in the case where optical communication is performed between a single phototransistor and a single phototransistor, when communication interference occurs in the optical communication path due to dust, etc., it can cause a data error in optical communication.

Hence, other embodiments of the present invention are configured so as to overcome such a problem. As phototransistors 13 on the disk 10, a plurality of spaced phototransistors having the same phototransistor specification are connected in parallel functionally in order to prevent the reliability degradation of a transmission path due to dust, etc. The reason why spaced phototransistors are connected in parallel functionally is that since there are variations in individual semiconductor devices, it is common practice to employ not a simple parallel connection but individually stable circuits, etc. Such a configuration is called an optical space diversity configuration.

Configurations of embodiments based on optical space diversity will hereinafter be described.

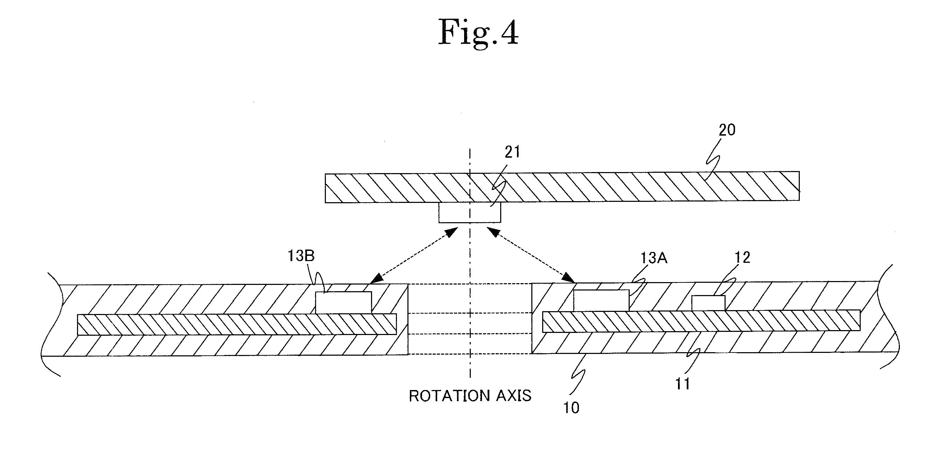

FIG. 4 shows a fourth embodiment in which the optical space diversity configuration is applied to the embodiment shown in FIG. 1. In FIG. 4, the same parts as FIG. 1 are given the same reference numerals.

This embodiment is provided with two phototransistors 13A and 13B, which are disposed at opposite positions on the same circle on a printed-circuit board 11 in an optical disk 10.

According to such a configuration, the free space propagation path length of communication light between each of the two phototransistors 13A and 3B and the phototransistor 21 of the printed-circuit board 20 remains constant, so a loss in the communication path can be kept constant and the SIN ratio of the communication path can be maximized. In addition, even if communication interference occurs in either of the optical paths of the two phototransistors 13A and 13B because of the influence of dust or a failure, normal communication is maintained by the remaining phototransistor.

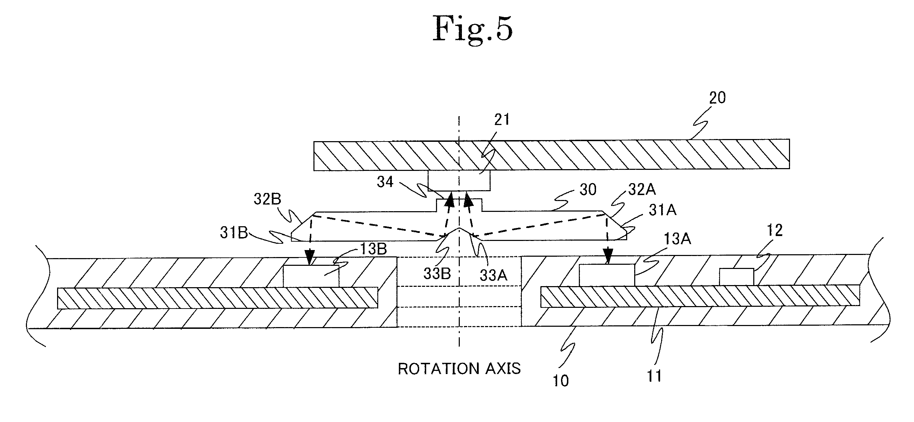

FIG. 5 shows a fifth embodiment in which the optical space diversity configuration is applied to the embodiment shown in FIG. 2. In FIG. 5, the same parts as FIG. 2 are given the same reference numerals.

This embodiment, as with FIG. 4, is provided with two phototransistors 13A and 13B, which are disposed at opposite positions on the same circle on a printed-circuit board 11 in an optical disk 10.

On the other hand, a disc adapter 30 fixed to a printed-circuit board 20 is provided with a pair of first transparent portions 31A and 31B, a pair of first reflecting portions 32A and 32B, a pair of second reflecting portions 33A and 33B, and a second transparent portion 34, which function to correspond to the phototransistors 13A and 13B, respectively.

More specifically, the first transparent portions 31A and 31B face the phototransistors 13A and 13B of the optical disk 10, respectively. The incident light from the phototransistors 13A and 13B is reflected at the first reflecting portions 32A and 32B. The light reflected at the first reflecting portions 32A and 32B is reflected at the second reflecting portions 33A and 33B and goes to the second transparent portion 34. Because the second transparent portion 34 faces the phototransistor 21 provided on the external printed-circuit board 20, the light falling on the second transparent portion 34 falls on the phototransistor 21, whereby the transmission of an optical signal is performed from the circuit 12 of the optical disk 10 to the external printed-circuit board 20.

On the other hand, as with the aforementioned, through the reverse light route, the optical signal transmission from the external printed-circuit board 20 to the circuit 12 of the optical disk 10 is performed. That is, the light emitted from the printed-circuit board 20 through the phototransistor 21 falls on the second transparent 34, is then reflected at the second reflecting portions 33A and 33B, and is further reflected at the first reflecting portions 32A and 32B. The light reflected at the first reflecting portions 32A and 32B goes to the first transparent portions 31A and 31B. Because the first transparent portions 31A and 31B face the phototransistors 13A and 13B of the optical disk 10, the light falling on the first transparent portions 31A and 31B falls on the phototransistors 13A and 13B. Thus, the optical signal transmission to the circuit 12 of the optical disk 10 is performed.

According to such a configuration, the free space propagation path length of the communication light between each of the two phototransistors 13A and 13B and the phototransistor 21 of the printed-circuit board 20 remains constant, so a loss in the communication path can be kept constant and the S/N ratio in the communication path can be maximized. In addition, even if communication interference occurs in either of the optical paths of the two phototransistors 13A and 13B because of the influence of dust or a failure, normal communication is maintained by the remaining phototransistor.

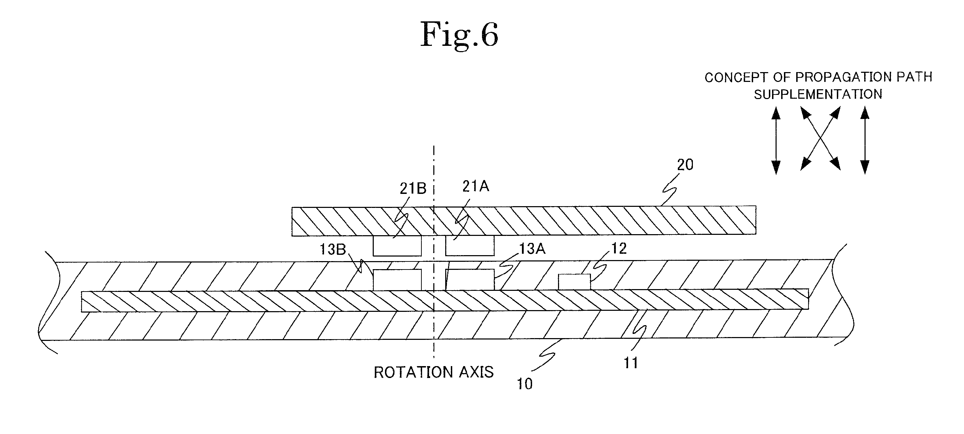

FIG. 6 shows a sixth embodiment in which the optical space diversity configuration is applied to the embodiment shown in FIG. 3. In FIG. 6, the same parts as FIG. 3 are given the same reference numerals.

In this embodiment, two phototransistors 13 connected to a circuit 12 of a printed-circuit board 11 buried in a disk 10 are provided near the center axis of rotation of the disk 10. Above the center axis of rotation of the disk 10, an external printed-circuit board 20 is provided with a phototransistor 21.

In this embodiment, the phototransistors 13A and 13B provided on the printed-circuit board 11 in the disk 10 are disposed near the rotation axis of the disk 10, and the phototransistor 21 facing the phototransistor 13 as a communication destination is disposed above the rotation axis of the disk 10, so the propagation path of communication light is kept approximately shortest and constant regardless of rotation of the disk 10. Accordingly, a loss in the communication path and leakage of light from the optical path can be minimized, whereby the transmission efficiency of the communication path can be increased and the transmission capacity can be maximally used. Furthermore, even if communication interference occurs in either of the optical paths of the two phototransistors 13A and 13B because of the influence of dust or a failure, normal communication is maintained by the remaining phototransistor.

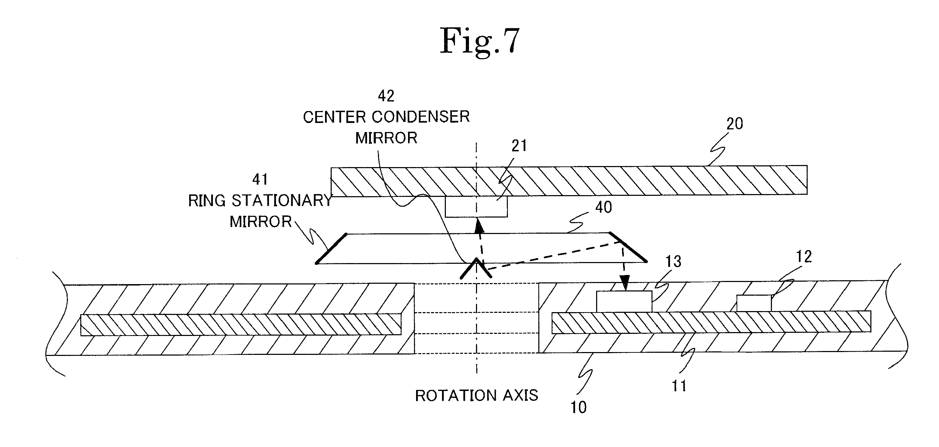

Next, an alteration of the structure of FIG. 2 will be described as a seventh embodiment with reference to FIG. 7. This embodiment employs an adapter 40 instead of the adapter 30. The adapter 40 employs a ring stationary mirror 40 and a center condenser mirror 42.

This embodiment has the ring stationary mirror 40 including a reflecting member provided on the inclined surface of the adapter 40 which faces the phototransistor 13, and also has the center condenser mirror 42 disposed above the rotation axis of a disk 10.

The optical path between the phototransistor 13 of the optical disk 10 and the phototransistor 21 of the printed-circuit board 20 is made by the ring stationary mirror 41 and center condenser mirror 42.

A configuration based on optical space diversity is easily obtained by adopting the same configuration as FIG. 5.

In the configurations of the above-described embodiments, optical communication is made in block units (temporal, spatial, etc.), and electric power for an electronic circuit on a disk, a clock signal, and at least a timing signal in a block unit of communication data in a block unit are supplied from outside the disk to the disk by contact-type or non-contact type connection means. In this manner, electric power for the disk is ensured and a CPU clock signal and block transfer timing information are obtained.

By supplying at least electric power for a disk from outside the disk by connection means other than light, light interference with optical communication can be eliminated and an improvement in the efficiency of optical communication with a simpler structure, a reduction in power consumption on a disk, structural simplification, and cost reductions become possible.

In addition, in the configuration where at least electric power for an electronic circuit on a disk is supplied from outside the disk by optical connection means, the supply of at least electric power for the disk may be separated from the optical communication by using two different frequencies of light. This configuration makes it possible to employ optical connection means structurally, resulting in simplification of a physical structure and cost reductions.

The present invention is also able to adopt a configuration (which allows predetermined degradation of conditions for constant distance and constant loss) in which an optical storage medium and a microcontroller are formed integrally with each other, and in controlling external equipment by the microcontroller, optical communication is performed between a light-emitting element (and/or a light-receiving element) rotating together with the optical storage medium and a light-receiving element (and/or a light-emitting element) as the other end of optical communication fixed outside the optical communication medium. This configuration is suitable in the case where communication speed leaves a margin.

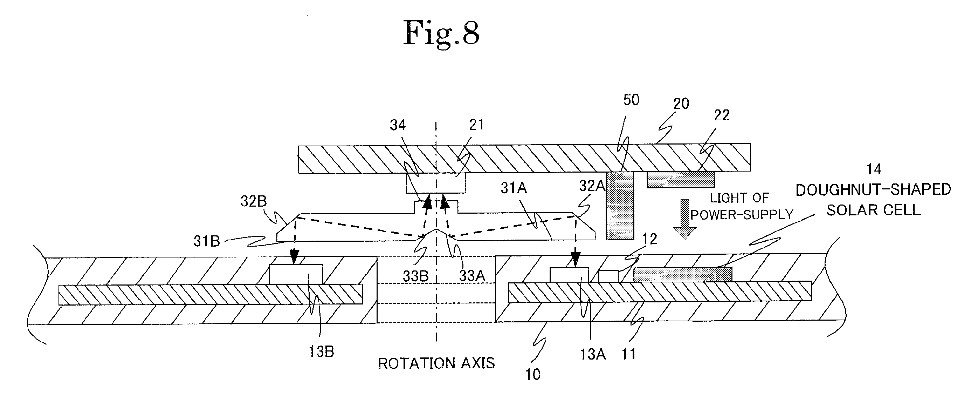

In the configuration where at least electric power for an electronic circuit on a disk is supplied from outside the disk by optical connection means, it is effective to separate the supply of the electric power for the disk and the optical communication from each other by mechanical and physical shielding. This configuration makes it possible to employ optical connection means structurally, resulting in simplification of a physical structure and cost reductions. FIG. 8 shows a simplified sectional view showing the configuration of this embodiment.

This embodiment is premised on the configuration of the embodiment shown in FIG. 5. A printed-circuit board 20 has a power-supply phototransistor 22 mounted on its surface which faces an optical disk 10. The optical disk 10 is provided with a doughnut-shaped solar cell 14 which receives the light from the phototransistor 22. The light emitted from the power-supply phototransistor 22 of the printed-circuit board 20 is received by the doughnut-shaped solar cell 11 provided on the optical disk 10. The doughnut-shaped solar cell 11 is charged and used as the electric power for an electronic circuit mounted on the optical disk 10.

In this embodiment, to avoid interference with the light for data communication (interference with phototransistors 13A and 13B), the printed-circuit board 20 is provided with a shielding wall 50, which prevents the light from the phototransistor 22 from leaking toward the phototransistors 13A and 13B. In addition to mechanical shielding, examples of such optical shielding are frequency shielding, polarization shielding, etc.

In the embodiments described above, in the case where at least electric power for an electronic circuit on the disk is supplied from outside the disk by optical connection means, light from a light-emitting element for sending electric power may be amplitude-modulated according to upward communication digital information by a pulse and is transmitted to the disk. And in the disk, the output from a light-receiving element on the disk may be smoothed and used as electric power, while the amplitude of the output of the hght-receiving element, or the amplitude of the output from another light-receiving element separately provided, may be detected and used as an upward communication digital signal. The advantage of using the light-receiving element separately provided is that a light-receiving semiconductor device with better high-speed sensitivity than the solar cell for receiving electric power can be employed. This makes it possible to employ optical connection means structurally, resulting in simplification of a physical structure and cost reductions.

According to this embodiment, continuous light on which digital amplitude shift keying has been performed is emitted from the light-emitting element to the disk. In the disk, this light is received by the phototransistor and solar cell. In the former, by cutting a direct component with a capacitor and amplifying, upward communication digital data is obtained. On the other hand, in the latter, by removing a high frequency (modulated signal) being output by smoothing, the resultant light is used as direct-current power.

While the present invention has been described with reference to the preferred embodiments thereof, the invention is not to be limited to the details given herein, but may be modified within the scope of the invention hereinafter claimed.

For example, the first and second reflecting portions of the adapter 30 shown in FIG. 2 may employ a plastic member containing an emulsion which scatters light, and an optical guide portion whose refractive index becomes higher as it goes outside, or only the second reflecting portion may be formed into a different shape than the aforementioned shape. For instance, the "reflecting portion" includes "an optical guide portion for curving an optical path by using the inclination of a refractive index" and "a light-scattering portion having a fine particle incorporated therein."

In addition, even in the case where the second optical means for light transmission and reception provided above the axis of rotation of the first optical means is slightly offset from the axis of rotation because of a rotating shaft or an obstacle, by taking a variation in the communication path due to that offset into consideration, it is obvious to those skilled in the art that various modifications can be made within the scope of the invention hereinafter claimed.

**Claims**

1.  A disk communication structure comprising:

    a rotatable disk having an electronic circuit mounted thereon;
    first optical means for transmitting and receiving light, provided on said disk;
    a stationary member physically separated from said disk; and
    second optical means for transmitting and receiving light, provided on a portion of said stationary member which faces said first optical means and disposed above an axis of rotation of said disk; wherein
    optical communication is performed between said first optical means and said second optical means.

2.  A disk communication structure comprising:

    a rotatable disk having an electronic circuit mounted thereon;
    first optical means for transmitting and receiving light, provided on said disk;
    a stationary member physically separated from said disk;
    second optical means for transmitting and receiving light, provided on a portion of said stationary member which faces said first optical means and disposed above an axis of rotation of said disk; and
    an adapter for setting an optical path between said first optical means and said second optical means, provided on said stationary member; wherein
    optical communication is performed between said first optical means and said second optical means.

3.  A disk communication structure comprising:

    a rotatable disk having an electronic circuit mounted thereon;
    first optical means for transmitting and receiving light, provided on a center of rotation of said disk;
    a stationary member physically separated from said disk; and
    second optical means for transmitting and receiving light, provided on a portion of said stationary member which faces said first optical means and disposed above an axis of rotation of said disk; wherein
    optical communication is performed between said first optical means and said second optical means.

4.  A disk communication structure comprising:

    a rotatable disk having an electronic circuit mounted thereon;
    a plurality of first optical means for transmitting and receiving light, provided at spaced positions on said disk;
    a stationary member physically separated from said disk; and
    second optical means for transmitting and receiving light, provided on a portion of said stationary member which faces said first optical means and disposed above an axis of rotation of said disk; wherein
    optical communication is performed between said plurality of first optical means and said second optical means.

5.  A disk communication structure comprising:

a rotatable disk having an electronic circuit mounted thereon;
a plurality of first optical means for transmitting and receiving light, provided at spaced positions on said disk;
a stationary member physically separated from said disk;
second optical means for transmitting and receiving light, provided on a portion of said stationary member which faces said first optical means and disposed above an axis of rotation of said disk; and
an adapter for setting an optical path between said plurality of first optical means and said second optical means, provided on said stationary member; wherein
optical communication is performed between said plurality of first optical means and said second optical means.

6. A disk communication structure comprising:

a rotatable disk having an electronic circuit mounted thereon;
a plurality of first optical means for transmitting and receiving light, provided so as to be spaced on a center of rotation of said disk;
a stationary member physically separated from said disk; and
second optical means for transmitting and receiving light, provided on a portion of said stationary member which faces said first optical means and disposed above an axis of rotation of said disk; wherein
optical communication is performed between said plurality of first optical means and said second optical means.

7. The disk communication structure as set forth in any one of claims 4 to 6, wherein said plurality of first optical means comprise two optical means.

8. The disk communication structure as set forth in any one of claims 1 to 7, wherein said first optical means is connected with the circuit provided on said disk.

9. The disk communication structure as set forth in claim 8, wherein said electronic circuit is buried in said disk.

10. The disk communication structure as set forth in any one of claims 4 to 6, wherein said plurality of first optical means comprise two optical means having the same specification.

11. The disk communication structure as set forth in any one of claims 4 to 6, wherein one of two signals from said two optical means is used.

12. The disk communication structure as set forth in claim 2 or 5, wherein said adapter is discal in shape, has a first transparent portion, a first reflecting portion, a second reflecting portion, and a second transparent portion, and is configured such that said first transparent portion optically communicates with said first optical means, said first reflecting portion reflects light in order to transfer light between said first transparent portion and said second reflecting portion, said second reflecting portion reflects light in order to transfer light between said second transparent portion and said first reflecting portion, and said second transparent portion optically communicates with said second optical means.

13. The disk communication structure as set forth in claim 12, wherein said reflecting portion comprises a ring stationary mirror, and said second reflecting portion comprises a center condenser mirror.

14. The disk communication structure as set forth in any one of claims 1 to 13, wherein optical communication through said optical means is performed in block units.

15. The disk communication structure as set forth in any one of claims 1 to 14, wherein electric power for said electronic circuit, a clock signal, and at least a timing signal in a block unit of communication data in a block unit are supplied from outside said disk to said disk by contact-type or non-contact type connection means.

16. The disk communication structure as set forth in claim 15, wherein said electric power for said electronic circuit is supplied from outside said disk by connection means other than light.

17. The disk communication structure as set forth in claim 15, wherein said electric power for said electronic circuit is supplied by light that has a frequency different from a frequency for said optical communication.

18. The disk communication structure as set forth in claim 17, wherein an optical path for said electric power is optically shielded from an optical path for said optical communication.

19. The disk communication structure as set forth in any one of claims 1 to 18, wherein said disk comprises an optical disk.

20. The disk communication structure as set forth in any one of claims 1 to 19, wherein said optical means comprises a phototransistor.

# Fig.1

FREE SPACE PROPAGATION PATH

ROTATION AXIS

EP 1 883 071 A1

Fig.2

# Fig.3

EP 1 883 071 A1

# Fig.4

EP 1 883 071 A1

Fig.5

# Fig.6

EP 1 883 071 A1

CONCEPT OF PROPAGATION PATH
SUPPLEMENTATION

21B    21A

20

13B    13A    12

ROTATION AXIS

10

11

# Fig.7

42
CENTER CONDENSER
MIRROR

21

20

41
RING STATIONARY
MIRROR

40

13

12

11

ROTATION AXIS

10

EP 1 883 071 A1

# Fig.8

EP 1 883 071 A1

<table>
<tr><td colspan="2">**INTERNATIONAL SEARCH REPORT**</td><td colspan="2">International application No.<br>PCT/JP2006/308139</td></tr>
</table>

| | |
|---|---|
| A. CLASSIFICATION OF SUBJECT MATTER<br>*G11B23/30*(2006.01), *G11B7/24*(2006.01)<br><br><br>According to International Patent Classification (IPC) or to both national classification and IPC | |

**B. FIELDS SEARCHED**

Minimum documentation searched (classification system followed by classification symbols)
*G11B23/30*(2006.01), *G11B7/24*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 11-312377 A  (Hitachi, Ltd.),<br>09 November, 1999 (09.11.99),<br>Full text; all drawings<br>(Family: none) | 1-6,14,15,19<br>7-13,16-18,<br>20 |
| X<br><br>A | JP 2000-509541 A  (Gizekke und Defuriento GmbH.),<br>25 July, 2000 (25.07.00),<br>Full text; all drawings<br>& US 6044046 A1          & EP 895637 A<br>& WO 97/41562 A1 | 1-11,14-17,<br>19,20<br>12,13,18 |

| ☐ Further documents are listed in the continuation of Box C. | ☐ See patent family annex. |
|---|---|

| | |
|---|---|
| *    Special categories of cited documents:<br>"A"  document defining the general state of the art which is not considered  to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    29 May, 2006 (29.05.06) | Date of mailing of the international search report<br>    06 June, 2006 (06.06.06) |
|---|---|
| Name and mailing address of the ISA/<br>    Japanese Patent Office | Authorized officer |
| Facsimile No. | Telephone No. |

Form PCT/ISA/210 (second sheet) (April 2005)

**EP 1 883 071 A1**

## REFERENCES CITED IN THE DESCRIPTION

### Patent documents cited in the description

- JP 11007703 A